# EUROPEAN PATENT APPLICATION

(11) **EP 4 668 754 A1**
(43) Date of publication of application: **24.12.2025**
(21) Application number: 24756250.7
(22) Date of filing: 07.02.2024
(51) Int. Cl.: H04N 21/2187

(54) **INTERACTION METHOD FOR LIVE BROADCAST AND TERMINAL DEVICE**

(30) Priority: 14.02.2023 CN 202310149230
(71) Applicant: Beijing Zitiao Network Technology Co., Ltd., Beijing 100190 (CN)
(72) Inventor: LI, Yijie, Beijing 100028 (CN)
(74) Representative: Grünecker Patent- und Rechtsanwälte PartG mbB
(86) International application number: PCT/CN2024/076702
(87) International publication number: WO 2024/169877

(57) **Abstract**

Embodiments of the disclosure provides an interaction method for live streaming and a terminal device. The method includes: receiving a first input including an input for a live streaming interface; displaying, in the case that a live streaming login account corresponding to the live streaming interface has at least one interaction resource, an interaction resource list according to the at least one interaction resource; receiving a second input including an input for a target interaction resource in the interaction resource list; and in response to the second input, publishing target interaction information corresponding to the target interaction resource in a live streaming room corresponding to the live streaming, so as to present a resource operation page corresponding to the target interaction resource in response to receiving an input for the target interaction information. The present disclosure enriches the interaction experience of live streaming.

## Description

This application claims priority to Chinese Patent Application No. 2023101492303, filed on February 14, 2023 and entitled "INTERACTION METHOD FOR LIVE STREAMING AND TERMINAL DEVICE", the disclosure of which is incorporated herein by reference in its entirety.

### FIELD

The present disclosure relates to the technical field of live streaming, and in particular, to an interaction method for live streaming and a terminal device.

### BACKGROUND

With the rapid development of terminal technology and network technology, live streaming has become very common, and in the live streaming process, users in the same live streaming room can interact with each other. However, at present, the interaction of users in the live streaming room is limited to sending characters or emoticons, and the interaction form is relatively monotonous.

### SUMMARY

In view of this, embodiments of the present disclosure provide an interaction method and apparatus for live streaming, in order to enrich interaction experience of live streaming.

In order to achieve the above object, the embodiments of the present disclosure provide technical solutions as follows.

According to a first aspect, an embodiment of the present disclosure provides an interaction method for live streaming, comprising:
receiving a first input comprising an input for a live streaming interface;
in accordance with a determination that a live streaming login account corresponding to the live streaming interface has at least one interaction resource, displaying an interaction resource list according to the at least one interaction resource;
receiving a second input comprising an input for a target interaction resource in the interaction resource list; and
in response to the second input, publishing target interaction information corresponding to the target interaction resource in a live streaming room corresponding to the live streaming, so as to present a resource operation page corresponding to the target interaction resource in response to receiving an input for the target interaction information.

As an optional implementation of the embodiment of the present invention, the method further comprises:
classifying and presenting, in the interaction resource list, the at least one interaction resource according to a resource obtaining mode of the interaction resource,
wherein the resource obtaining mode of the interaction resource comprises: obtaining the interaction resource through resource exchange and obtaining the interaction resource by completing a specified task.

As an optional implementation of the embodiment of the present invention, the method further comprises:
outputting guidance information in the case that the live streaming login account corresponding to the live streaming interface has no interaction resource;
wherein the guidance information is used for guiding a user to obtain an interaction resource.

As an optional implementation of the embodiment of the present invention, the target interaction information comprises:
an account identifier, description information and a resource card,
wherein the account identifier is used for identifying a user publishing the target interaction information, the description information is used for describing the target interaction information, and the resource card is used for describing the target interaction resource.

As an optional implementation of the embodiment of the present invention, the resource card comprises:
a bottom frame, a front cover image of the target interaction resource and a name of the target interaction resource,
wherein the front cover image and the name are superimposed on the bottom frame.

According to a second aspect, an embodiment of the present disclosure provides an interaction method for live streaming, the method comprising:
displaying a live streaming interface comprising target interaction information corresponding to a target interaction resource;
receiving an input for the target interaction information; and
in response to the input for the target interaction information, presenting a resource operation page corresponding to the target interaction resource on the live streaming interface.

As an optional implementation of the embodiment of the present disclosure, the method further comprises:
receiving an input for a first control in the resource operation page; and
performing an operation corresponding to the first control in the resource operation page in response to the input for the first control.

As an optional implementation of the embodiment of the present disclosure, the target interaction resource is a song list comprising at least one song, and the resource operation page comprises an identifier of the at least one song and a song request control corresponding to each song; the first control is a song request control corresponding to a target song on the resource operation page; and performing an operation corresponding to the first control in the resource operation page in response to the input for the first control comprises:
in response to an input for the song request control corresponding to the target song, obtaining audio data of the target song, and adding the audio data of the target song to an audio data playback queue in the live streaming room.

As an optional implementation of the embodiment of the present disclosure, the target interaction resource is a target prop, the resource operation page is a presentation page of the target prop, and the first control is a control for triggering the resource transfer on the target prop in the presentation page of the target prop; performing an operation corresponding to the first control in the resource operation page in response to the input for the first control comprises:
performing a resource transfer on the target prop in response to an input for the control for triggering the resource transfer on the target prop.

As an optional implementation of the embodiment of the present disclosure, presenting the resource operation page corresponding to the target interaction resource on the live streaming interface comprises:
superimposing the resource operation page corresponding to the target interaction resource in a preset area of the live streaming interface.

As an optional implementation of the embodiment of the present disclosure, the method further comprises: after performing a resource transfer on the target prop, presenting an effect corresponding to the target prop in response to a user request for the target prop.

According to a third aspect, an embodiment of the present disclosure provides a terminal device, comprising:
a user input unit configured to receive a first input comprising an input for a live streaming interface;
a display unit configured to display, in accordance with a determination that a live streaming login account corresponding to the live streaming interface has at least one interaction resource, an interaction resource list according to the at least one interaction resource;
the user input unit further configured to receive a second input comprising an input for a target interaction resource in the interaction resource list; and
a processing unit configured to, in response to the second input, publish target interaction information corresponding to the target interaction resource in a live streaming room corresponding to the live streaming, so as to present a resource operation page corresponding to the target interaction resource in response to receiving an input for the target interaction information.

As an optional implementation of the embodiment of the present invention, the display unit is specifically configured to classify and present, in the interaction resource list, the at least one interaction resource according to a resource obtaining mode of the interaction resource;
wherein the resource obtaining mode of the interaction resource comprises: obtaining the interaction resource through resource exchange and obtaining the interaction resource by completing a specified task.

As an optional implementation of the embodiment of the present invention, the display unit is further configured to output guidance information in the case that the live streaming login account corresponding to the live streaming interface has no interaction resource;
wherein the guidance information is used for guiding a user to obtain an interaction resource.

As an optional implementation of the embodiment of the present invention, the target interaction information comprises:
an account identifier, description information and a resource card;
wherein the account identifier is used for identifying a user publishing the target interaction information, the description information is used for describing the target interaction information, and the resource card is used for describing the target interaction resource.

As an optional implementation of the embodiment of the present invention, the resource card comprises:
a bottom frame, a front cover image of the target interaction resource and a name of the target interaction resource;
the front cover image and the name are superimposed on the bottom frame.

According to a fourth aspect, an embodiment of the present disclosure provides a terminal device, comprising:
a display unit configured to display a live streaming interface, wherein the live streaming interface comprises target interaction information corresponding to a target interaction resource;
a user input unit configured to receive an input for the target interaction information;
the display unit further configured to display a resource operation page corresponding to the target interaction resource on the live streaming interface in response to the input for the target interaction information.

As an optional implementation of the embodiment of the present disclosure, the terminal device further comprises: a processing unit;
the user input unit further configured to receive an input for a first control in the resource operation page;
the processing unit configured to perform an operation corresponding to the first control in the resource operation page in response to the input for the first control.

As an optional implementation of the embodiment of the present disclosure, the target interaction resource is a song list comprising at least one song, and the resource operation page comprises an identifier of the at least one song and a song request control corresponding to each song; the first control is a song request control corresponding to a target song on the resource operation page; and the processing unit is specifically configured to obtain, in response to an input for the song request control corresponding to the target song, audio data of the target song, and add the audio data of the target song to an audio data playback queue in the live streaming room.

As an optional implementation of the embodiment of the present disclosure, the target interaction resource is a target prop, the resource operation page is a presentation page of the target prop, and the first control is a control for triggering the resource transfer on the target prop in the presentation page of the target prop; the processing unit is specifically configured to perform a resource transfer on the target prop in response to an input for the control for triggering the resource transfer on the target prop.

As an optional implementation of the embodiment of the present disclosure,
the display unit is further configured to, after performing a resource transfer on the target prop, present effects corresponding to the target prop in response to a use request for the target prop.

As an optional implementation of the embodiment of the present disclosure,
the display unit is specifically configured to superimpose the resource operation page corresponding to the target interaction resource in a preset area of the live streaming interface.

According to a fifth aspect, an embodiment of the present disclosure provides an electronic device, comprising: a memory and a processor, wherein the memory is configured to store a computer program; the processor is configured to, when executing a computer program, enable the electronic device to implement the interaction method for live streaming according to any one of the foregoing implementations.

According to a sixth aspect, an embodiment of the present disclosure provides a computer readable storage medium. The computer program, when executed by a computing device, causes the computing device to implement the interaction method for live streaming according to any one of the foregoing implementations.

According to a seventh aspect, an embodiment of the present disclosure provides a computer program product. The computer program product, when running on a computer, causes the computer to implement the interaction method for live streaming according to any one of the foregoing implementations.

In the interaction method for live streaming provided in the embodiment of the present disclosure, in response to receiving the first input for the live streaming interface and that the live streaming login account corresponding to the live streaming interface has at least one interaction resource, an interaction resource list is displayed according to the at least one interaction resource, and then upon receiving a second input for a target interaction resource in the interaction resource list, in response to the second input, the target interaction information corresponding to the target interaction resource is published in a live streaming room corresponding to the live streaming interface, so as to present a resource operation page corresponding to the target interaction resource in the case that the input for the target interaction information is received. With the interaction method for live streaming provided by the embodiment of the present disclosure, the user may publish the target interaction information corresponding to the target interaction resource in the live streaming room, so that the terminal device in the live streaming room displays the live streaming interface comprising the target interaction information. Furthermore, any terminal device in the live streaming room is supported to present a resource operation page corresponding to the target interaction resource according to the target interaction information, Therefore, the embodiments of the present disclosure may enrich the live interaction experience.

### BRIEF DESCRIPTION OF THE DRAWINGS

The accompanying drawings, which are incorporated herein and form a part of this specification, illustrate embodiments consistent with the present disclosure and serve to explain the principles of the disclosure together with the specification.

To illustrate the technical solutions in the embodiments of the present disclosure or in the prior art more clearly, a brief introduction is presented below to the accompanying drawings required for describing the embodiments or the prior art. Apparently, those of ordinary skill in the art may further derive other drawings from these accompanying drawings without creative efforts.
FIG. 1 is a scenario architecture diagram of an interaction method for live streaming provided by an embodiment of the present disclosure;
FIG. 2 is a flowchart of an interaction method for live streaming provided by an embodiment of the present disclosure;
FIG. 3 is a first interface diagram of an interaction method for live streaming provided by an embodiment of the present disclosure;
FIG. 4 is a second interface diagram of an interaction method for live streaming provided by an embodiment of the present disclosure;
FIG. 5 is a flowchart of another interaction method for live streaming according to an embodiment of the present disclosure;
FIG. 6 is a third interface diagram of an interaction method for live streaming provided by an embodiment of the present disclosure;
FIG. 7 is an interaction flowchart of an interaction method for live streaming provided by an embodiment of the present disclosure;
FIG. 8 is a schematic diagram of interaction information provided by an embodiment of the present disclosure;
FIG. 9 is a schematic structural diagram of a resource card for interaction information provided by an embodiment of the present disclosure;
FIG. 10 is a first schematic diagram of a preset area of interaction information provided by an embodiment of the present disclosure;
FIG. 11 is a second schematic diagram of a preset area of interaction information provided by an embodiment of the present disclosure;
FIG. 12 is a schematic diagram of a first control provided by an embodiment of the present disclosure;
FIG. 13 is a schematic structural diagram of a terminal device provided by an embodiment of the present disclosure;
FIG. 14 is a schematic structural diagram of another terminal device provided by an embodiment of the present disclosure;
FIG. 15 is a schematic structural diagram of hardware of an electronic device provided by an embodiment of the present disclosure.

### DETAILED DESCRIPTION

In order to more clearly understand the foregoing objects, features and advantages of the present disclosure, the solutions of the present disclosure will be further described below. It should be noted that the embodiments of the present disclosure and the features of the embodiments can be combined with each other without conflict.

Many specific details are set forth in the following description to provide a thorough understanding of the disclosure. However, the disclosure may further be implemented otherwise than as described herein. Apparently, the embodiments in the specification are only a part rather than all of the embodiments of the present disclosure.

In the embodiments of the present disclosure, words such as "exemplary" or "for example" are used for example, illustration, or description. Any embodiment or design described as "exemplary" or "for example" in the embodiments of the disclosure should not be construed as preferred or advantageous over other embodiments or designs. Specifically, words such as "exemplary" or "for example" are intended to present a related concept in a specific manner. In addition, in the description of the embodiments of the present disclosure, unless otherwise specified, the meaning of "a plurality of" refers to two or more.

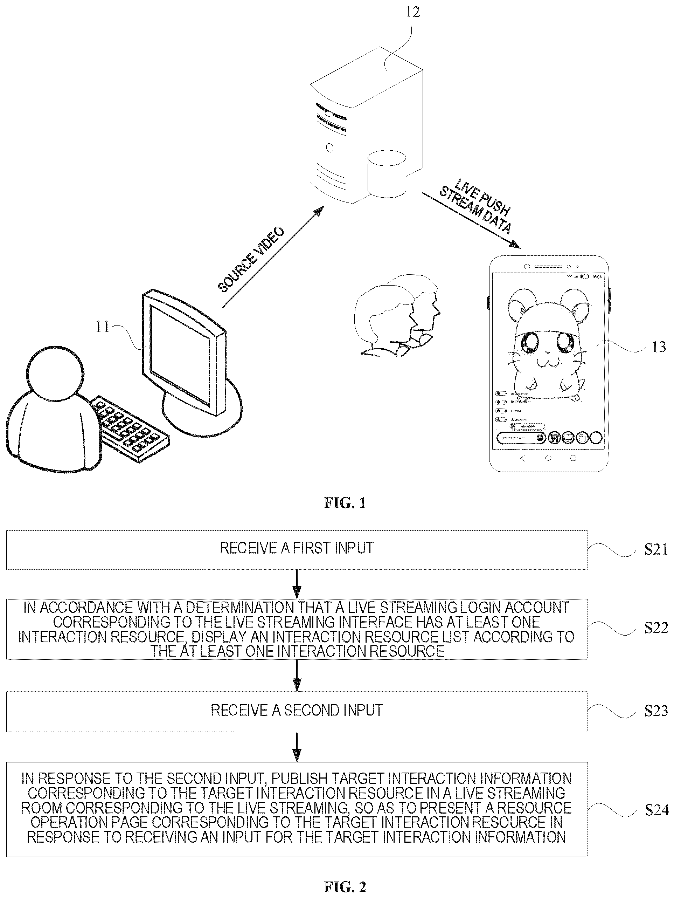

First of all, illustration is presented below to a scenario architecture of an interaction method for live streaming provided by an embodiment of the present application. Referring to FIG. 1, a scenario architecture of an interaction method for live streaming provided by an embodiment of the present application comprises: at least one streamer side device 11, a live streaming server 12, and at least one viewer side device 13. The streamer side device 11 and the viewer side device 13 both belong to client devices, and the live streaming server 12 belongs to a server device.

The streamer side device 11 may send a live source video to the live streaming server 12, the live streaming server 12 may receive the source video sent by the streamer side device 11 and send live push stream data to the viewer side device 13 according to the source video. The viewer side device 13 may receive the live push stream data sent by the live streaming server 12, and display a live streaming interface according to the live push stream data sent by the live streaming server 12. Both the streamer side device 11 and the viewer side device 13 may send interaction information to the live streaming server 12, and the live streaming server 12 may also add the interaction information sent by the streamer side device 11 and/or the viewer side device 13 to the live push stream data, thereby displaying the interaction information sent by the streamer side device 11 and/or the viewer side device 13 in the live streaming interface.

An embodiment of the present disclosure provide an interaction method for live streaming. The interaction method for live streaming may be applied to any terminal device in a live streaming room. Referring to FIG. 2, the interaction method for live streaming comprises the following steps S21 to S24:
S21: Receiving a first input,
wherein the first input comprises an input for a live streaming interface.

The live streaming interface in the embodiment of the present application refers to a user interface which accesses a live streaming room and is displayed based on push stream data of the live streaming room.

The first input in the embodiment of the present disclosure may be an input to a control for triggering the display of an interaction resource list in the live streaming interface. Exemplarily, the first input may be a touch click input, a double click input, a drag input, or the like. In addition, the first input in the embodiment of the present disclosure may also be a specific voice instruction or a specific gesture. In some embodiments of the present disclosure, the specific gesture may be any one of a single-click gesture, a swipe gesture, a pressure recognition gesture, a long-press gesture, an area change gesture, a double-press gesture, and a double-click gesture.

In some embodiments, the control for triggering the sending of interaction information according to an interaction resource may be a control in an interaction information input panel, and the interaction information input panel may be superimposed on the live streaming interface or removed from the live streaming interface in response to a user operation.

S22: In response to that a live streaming login account corresponding to the live streaming interface has at least one interaction resource, displaying an interaction resource list according to the at least one interaction resource.

During the live streaming process, each terminal device accessing the live streaming room has a live streaming login account, and the terminal device displays a corresponding live streaming interface in a display screen of the terminal device according to the corresponding live streaming login account. Therefore, the live streaming interface in step S22 refers to a live streaming interface displayed in the terminal device that receives the first input, and the live streaming login account corresponding to the live streaming interface refers to a live streaming login account of the terminal device that receives the the first input.

In the embodiment of the present disclosure, the interaction resources may be services or virtual props obtained by exchanging resources or performing specified tasks, for example, song titles, song lists, effects props, home page decoration, services, etc.

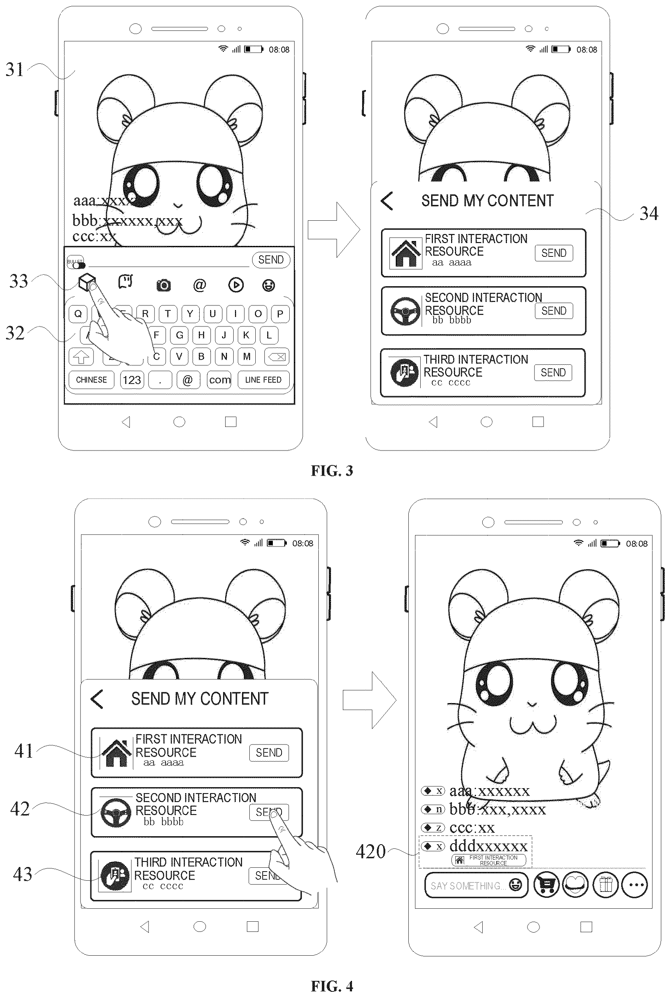

Exemplarily, as shown in FIG. 3, an interaction input panel 32 is superimposed on the live streaming interface of the terminal device, and the interaction input panel 32 comprises a target control 33 for triggering display of the interaction resource list. When a first input to the target control 33 is received, the terminal device first determines whether a live streaming login account corresponding to the live streaming interface has an interaction resource, and if the live streaming login account corresponding to the live streaming interface has one or more interaction resources, an interaction resource list 34 is displayed according to the at least one interaction resource.

Although illustration is presented in FIG. 3 by taking an example in which the interaction resource list 34 comprises a resource identifier for identifying each interaction resource and a sending control for triggering the sending of the interaction information corresponding to each interaction resource to the live streaming room, the embodiment of the present application is not limited thereto. Based on the above embodiment, the interaction resource list 34 may also present the interaction resources owned by the live streaming login account corresponding to the live streaming interface in other forms.

S23: Receiving a second input,
wherein the second input is an input for a target interaction resource in the interaction resource list.

Exemplarily, when the interaction resource list comprises a resource identifier for identifying each interaction resource and a sending control for triggering the sending of each interaction resource to the live streaming room, the second input may be an input for the sending control of the target interaction resource. The second input may be at least one of a touch click input, a double click input, a drag input, and the like.

S24: In response to the second input, publishing target interaction information corresponding to the target interaction resource in a live streaming room corresponding to the live streaming interface, so as to present a resource operation page corresponding to the target interaction resource in response to receiving an input for the target interaction information.

In some embodiments, an implementation of publishing the target interaction information corresponding to the target interaction resource in the live streaming room corresponding to the live streaming may comprise: publishing, by a live streaming server, the target interaction information corresponding to the target interaction resource in the live streaming room corresponding to the live streaming. For example, the target interaction information is sent to a live streaming server, and the live streaming server adds the target interaction information to live push stream data, so that the target interaction information corresponding to the target interaction resource is published in a live streaming room corresponding to the live streaming interface.

The resource operation page in the embodiment of the present disclosure may be any type of page, for example, a functional interface of an application program, a webpage, a hypertext markup language 5 (H5) page, etc.

Exemplarily, as shown in FIG. 4, the interaction resource list comprising a first interaction resource 41, a second interaction resource 42 and a third interaction resource 43 is taken as an example for illustration. When a second input for the second interaction resource 42 is received, in response to the second input, target interaction information 420 corresponding to the target interaction resource is published in a live streaming room corresponding to the live streaming interface, so that all terminal devices in the live streaming room display the live streaming interface comprising the target interaction information 420, and each terminal device may present a resource operation page corresponding to the second interaction resource 42 in response to an operation on the target interaction information.

In the interaction method for live streaming provided in the embodiment of the present disclosure, the first input for the live streaming interface is received, and in response to that the live streaming login account corresponding to the live streaming interface has at least one interaction resource, an interaction resource list is displayed according to the at least one interaction resource, and then when a second input for a target interaction resource in the interaction resource list is received, in response to the second input, the target interaction information corresponding to the target interaction resource is published in a live streaming room corresponding to the live streaming interface, so as to present a resource operation page corresponding to the target interaction resource where an input for the target interaction information is received. With the interaction method for live streaming provided by the embodiment of the present disclosure, the user may publish the target interaction information corresponding to the target interaction resource in the live streaming room, so as to cause the terminal device in the live streaming room to display the live streaming interface including the target interaction information, and so as to support any terminal device in the live streaming room to present a resource operation page corresponding to the target interaction resource according to the target interaction information, Therefore, the embodiments of the present disclosure may enrich the live interaction experience.

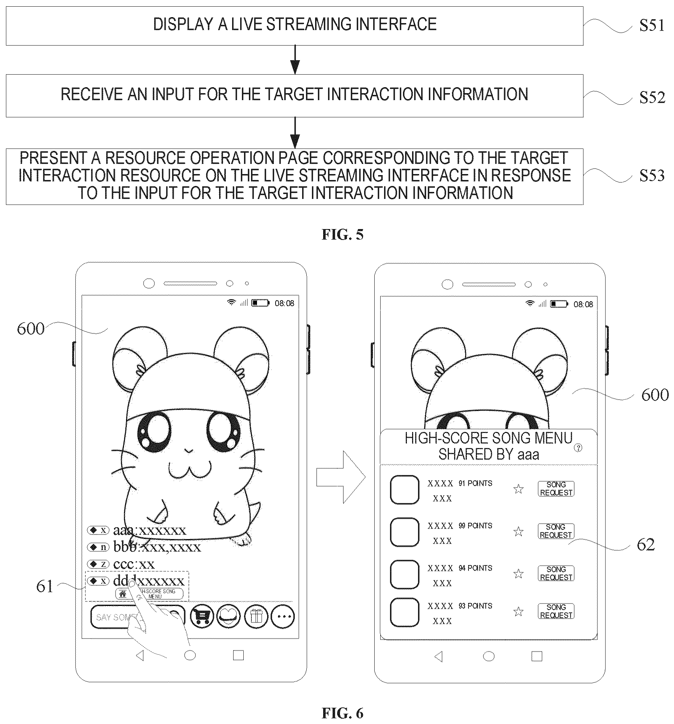

An embodiment of the present disclosure provides an interaction method for live streaming. The interaction method for live streaming is applicable to any terminal device in a live streaming room. Referring to FIG. 5, the interaction method for live streaming comprises the following steps S51 to S53:
S51: Displaying a live streaming interface.

The live streaming interface comprises target interaction information corresponding to a target interaction resource.

The live streaming interface in step S51 and the live streaming interface in step S22 may be the same or different live streaming interfaces. If the terminal device receiving the first input and a terminal device receiving an input for the target interaction information in the subsequent steps are the same terminal device, the live streaming interface in step S51 and the live streaming interface in step S22 are the same live streaming interface, and if the terminal device receiving the first input and a terminal device receiving an input for the target interaction information in the subsequent steps are different terminal devices, the live streaming interface in step S51 and the live streaming interface in step S22 are the same live streaming interface.

In some embodiments, an implementation of displaying the live streaming interface may comprise: receiving an input of a user for triggering entry to a live streaming room, obtaining live push stream data from a live streaming server in response to the input for triggering entry to the live streaming room, and displaying the live streaming interface according to the live push stream data obtained from the live streaming server.

S5: Receiving an input for the target interaction information.

Exemplarily, the input for the target interaction information may be a touch click input, a double click input, a drag input, or the like for the target interaction information.

S53: Presenting a resource operation page corresponding to the target interaction resource on the live streaming interface in response to the input for the target interaction information.

Exemplarily, as shown in FIG. 6, the target interaction resource being a song request service is illustrated as an example in FIG. 6. After any terminal device in a live streaming room sends target interaction information 61 corresponding to the song request service, each terminal device in the live streaming room displays a live streaming interface 600 comprising target interaction information 61 corresponding to the song request service. When a certain terminal device in the live streaming room receives an input for the target interaction information 61, the terminal device superimposes a resource operation page 62 corresponding to the song request service on the live streaming interface 600. The resource operation page 62 comprises identifiers of a plurality of songs and a selection control for selecting a respective song.

In the foregoing embodiment, a terminal device in the live streaming room may access a resource operation page corresponding to the target interaction resource through the target interaction information, and superimpose the resource operation page on the live streaming interface. Therefore, in the foregoing embodiment, an operation path of interaction information may be added, and further the interaction experience may be improved.

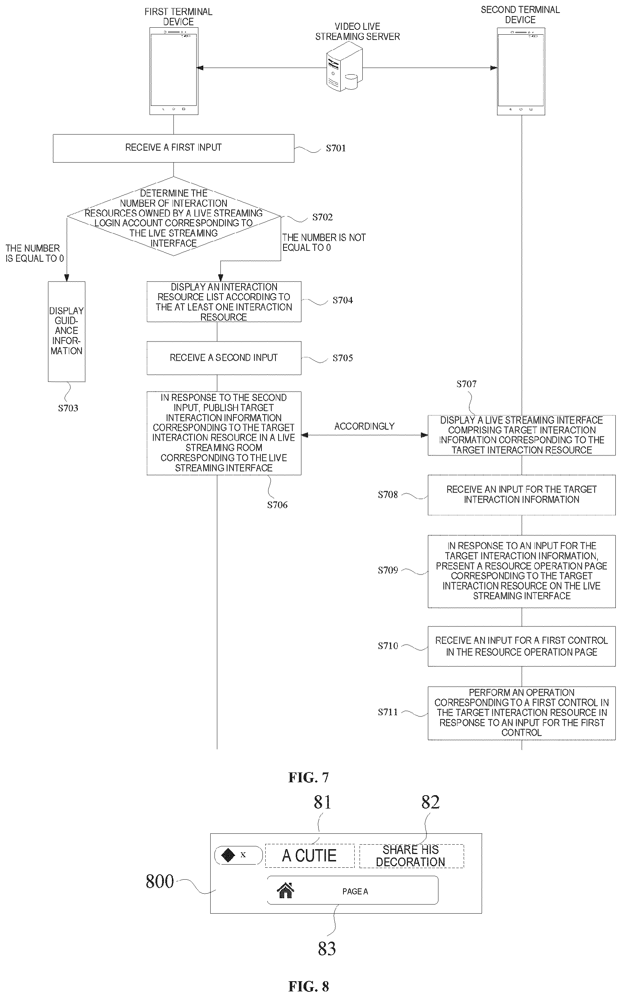

As an extension and refinement of the above embodiments, an embodiment of the present disclosure provides an interaction method for live streaming. Referring to FIG. 7, the interaction method for live streaming comprises the following steps:
S701: A first terminal device receiving a first input,
wherein the first input comprises an input for a live streaming interface displayed by the first terminal.

S702: The first terminal device determining the number of interaction resources possessed by a live streaming login account corresponding to the live streaming interface.

That is, when receiving an input for the target control, the first terminal device first determines whether a live streaming login account corresponding to the first terminal device has an obtained interaction resource.

In the step S702, if the live streaming login account corresponding to the live streaming interface has no interaction resource (the number of interaction resources of the live streaming login account corresponding to the live streaming interface is 0), the following step S703 is performed.

S703: The first terminal device displaying guidance information,
wherein the guidance information is for guiding a user to obtain an interaction resource.

In the step S702, if the live streaming login account corresponding to the live streaming interface has one or more interaction resources (the number of interaction resources of the live streaming login account corresponding to the live streaming interface is greater than or equal to 1), the following steps are performed:
S704: The first terminal device displaying an interaction resource list according to the at least one interaction resource.

In some embodiments, step S704 (displaying the interaction resource list according to the at least one interaction resource) comprises:
classifying and presenting the at least one interaction resource in the interaction resource list according to a resource obtaining mode for the interaction resource;
wherein the resource obtaining mode of the interaction resource comprises: obtaining the interaction resource through resource exchange and obtaining the interaction resource by completing a specified task.

That is, the interaction resources obtained through resource exchange and the interaction resources obtained by completing a specified task are classified and presented.

S705: The first terminal device receiving a second input,
wherein the second input is an input for a target interaction resource in the interaction resource list.

S706: The first terminal device publishing target interaction information corresponding to the target interaction resource in a live streaming room corresponding to the live streaming interface in response to the second input.

Since the first terminal device publishes target interaction information corresponding to the target interaction resource in a live streaming room corresponding to the live streaming interface, the terminal device in the live streaming room displays a live streaming interface including the target interaction information, and may display a resource operation page corresponding to the target interaction resource according to the target interaction information. Therefore, a second terminal device in the live streaming room performs the following step S707:
S707: A second terminal device displaying a live streaming interface comprising target interaction information corresponding to a target interaction resource.

Referring to FIG. 8, in some embodiments, the target interaction information comprises:
an account identifier 81, description information 82 and a resource card 83;
wherein the account identifier 81 is used for identifying a live streaming login account which publishes the target interaction information, the description information 82 is used for describing the target interaction information, and the resource card 83 is used for describing content of the target interaction resource.

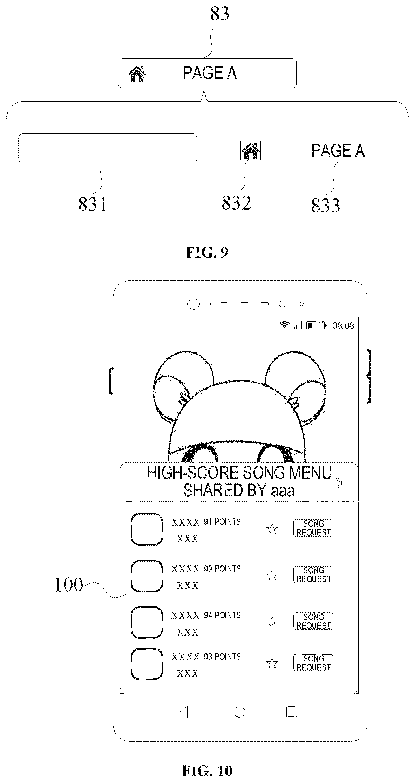

Referring to FIG. 9, in some embodiments, the resource card 83 comprises:
a bottom frame 831, a front cover image 832 of the target interaction resource, and a name 833 of the target interaction resource.

The front cover image 832 and the name 833 are superimposed on the bottom frame 831.

S708: The second terminal device receiving an input for the target interaction information.

S709: In response to the input for the target interaction information, the second terminal device presenting a resource operation page corresponding to the target interaction resource on the live streaming interface.

In some embodiments, presenting the resource operation page corresponding to the target interaction resource on the live streaming interface comprises:
superimposing the resource operation page corresponding to the target interaction resource in a preset area of the live streaming interface.

Exemplarily, referring to FIG. 10, the preset area 100 may be an area where a left edge, a right edge, and a lower edge are connected to a video playback interface.

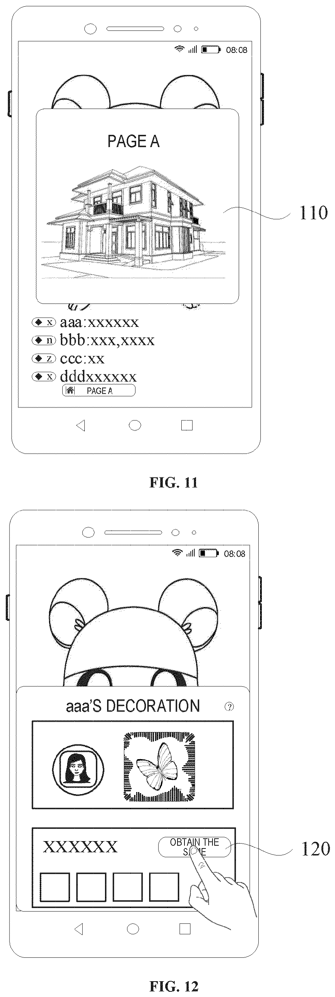

Exemplarily, as shown in FIG. 11, the preset area 110 may be an area whose geometric center overlaps with a geometric center of the live streaming interface.

S710: The second terminal device receiving an input for a first control in the resource operation page.

Exemplarily, the input for the first control in the resource operation page may be a touch click input, a double click input, a drag input and the like for the first control in the target interaction resource.

S711: The second terminal device, in response to an input for a first control in the target interaction resource, performing an operation corresponding to the first control.

Referring to FIG. 6, in some embodiments, the target interaction resource is a song list comprising at least one song, and the resource operation page 62 comprises an identifier of the at least one song and a song request control corresponding to each song.

When the first control is a song request control corresponding to a target song in the resource operation page, the above step S711 (in response to an input for a first control in the resource operation page, performing an operation corresponding to the first control) comprises:
in response to an input for a song request control corresponding to the target song, obtaining audio data of the target song, and adding the audio data of the target song to an audio data playback queue in the live streaming room.

Exemplarily, the audio data of the target song may specifically be accompaniment music of the target song, complete audio data of the target song, or the like, which is not limited in the embodiment of the present application.

The foregoing embodiment is described below by taking a scenario in which a plurality of persons are singing in a live streaming room as an example. First, a certain user in the live streaming room obtains a high-score song menu (a target interaction resource) composed of a plurality of songs with a high score by resource exchange or completing a designated task, and publishes target interaction information corresponding to the high-score song menu in the live streaming room, so that the target interaction information corresponding to the high-score song menu is displayed in the live streaming interface. After the target interaction information corresponding to the high-score song menu is displayed in the live streaming interface, one user in the live streaming room (a user publishing the target interaction information, or another user in the live streaming room), by performing an operation on the target interaction information, enables a terminal device thereof to display a resource operation page comprising identifiers of the plurality of songs and song request controls corresponding to respective songs. Then, the user performs an input to a song request control of a certain song in the resource operation page, and thereby obtains accompaniment music of the song and further adds the accompaniment music of the song to the audio data playback queue of the live streaming room so as to play the accompaniment music of the song in the live streaming room.

In some embodiments, the target interaction resource is a target prop, the resource operation page is a presentation page of the target prop, and the first control is a control for triggering the resource transfer on the target prop in the presentation page of the target prop.

When the first control is a control for triggering the resource transfer on the target prop in the presentation page of the target prop, the above step S711 (in response to an input for a first widget in the resource operation page, performing an operation corresponding to the first control) comprises:
performing a resource transfer on the target prop in response to an input for a control for triggering the resource transfer on the target prop.

Exemplarily, with reference to FIG. 12, illustration is presented in FIG. 12 by taking an example in which a target prop is homepage decoration and an input corresponding to the first control 120 in a presentation page of a target prop is to obtain the target prop. When an input for the first control 120 in the presentation page of the target prop is received, the second terminal device performs an operation to obtain the homepage decoration in response to the input for the first control 120 in the presentation page of the target interaction resource.

In some embodiments, the method further comprises:
after performing the resource transfer on the target prop, presenting effects corresponding to the target prop in response to a use request for the target prop.

Exemplarily, where the target prop is homepage decoration, after obtaining the homepage decoration, effects after applying the homepage decoration to a corresponding homepage may be presented in response to a use request for the homepage decoration.

Based on the same inventive concept, as an implementation of the above method, an embodiment of the present disclosure further provides an image-based locating apparatus. This embodiment corresponds to the foregoing method embodiment. For ease of reading, details in the foregoing method embodiment are not described herein again, However, it should be clear that the image-based locating apparatus in this embodiment may correspondingly implement all content in the foregoing method embodiment.

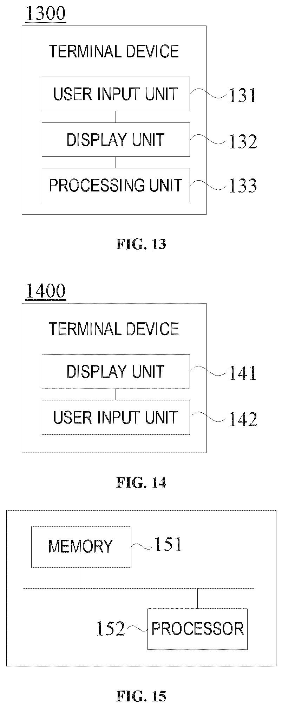

An embodiment of the present disclosure provides a terminal device. FIG. 13 is a schematic structural diagram of the terminal device. As shown in FIG. 13, the terminal device 1300 comprises:
a user input unit 131 configured to receive a first input comprising an input for a live streaming interface;
a display unit 132 configured to display, in the case that a live streaming login account corresponding to the live streaming interface has at least one interaction resource, an interaction resource list according to the at least one interaction resource;
the user input unit 131 further configured to receive a second input comprising an input for a target interaction resource in the interaction resource list;
and a processing unit 133 configured to, in response to the second input, publish target interaction information corresponding to the target interaction resource in a live streaming room corresponding to the live streaming, so as to present a resource operation page corresponding to the target interaction resource in response to receiving an input for the target interaction information.

As an optional implementation of the embodiment of the present invention, the display unit 132 is specifically configured to classify and present, in the interaction resource list, the at least one interaction resource according to a resource obtaining mode of the interaction resource;
wherein the resource obtaining mode of the interaction resource comprises: obtaining the interaction resource through resource exchange and obtaining the interaction resource by completing a specified task.

As an optional implementation of the embodiment of the present invention, the display unit 132 is further configured to output guidance information in the case that the live streaming login account corresponding to the live streaming interface has no interaction resource;
wherein the guidance information is used for guiding a user to obtain an interaction resource.

As an optional implementation of the embodiment of the present invention, the target interaction information comprises:
an account identifier, description information and a resource card;
wherein the account identifier is used for identifying a user publishing the target interaction information, the description information is used for describing the target interaction information, and the resource card is used for describing the target interaction resource.

As an optional implementation of the embodiment of the present invention, the resource card comprises:
a bottom frame, a front cover image of the target interaction resource and a name of the target interaction resource;
the front cover image and the name are superimposed on the bottom frame.

An embodiment of the present disclosure provides a terminal device. FIG. 14 is a schematic structural diagram of the terminal device. As shown in FIG. 14, the image-based locating apparatus 1400 comprises:
a display unit 141 configured to display a live streaming interface, wherein the live streaming interface comprises target interaction information corresponding to a target interaction resource;
a user input unit 142 configured to receive an input for the target interaction information;
the display unit 141 further configured to display a resource operation page corresponding to the target interaction resource on the live streaming interface in response to the input for the target interaction information.

As an optional implementation of the embodiment of the present disclosure, the terminal device 1400 further comprises: a processing unit;
the user input unit 142 further configured to receive an input for a first control in the resource operation page;
the processing unit configured to perform an operation corresponding to the first control in the resource operation page in response to the input for the first control.

As an optional implementation of the embodiment of the present disclosure, the target interaction resource is a song list comprising at least one song, and the resource operation page comprises an identifier of the at least one song and a song request control corresponding to each song; the first control is a song request control corresponding to a target song on the resource operation page; and the processing unit is specifically configured to obtain, in response to an input for the song request control corresponding to the target song, audio data of the target song, and add the audio data of the target song to an audio data playback queue in the live streaming room.

As an optional implementation of the embodiment of the present disclosure, the target interaction resource is a target prop, the resource operation page is a presentation page of the target prop, and the first control is a control for triggering the resource transfer on the target prop in the presentation page of the target prop; the processing unit is specifically configured to perform a resource transfer on the target prop in response to an input for the control for triggering the resource transfer on the target prop.

As an optional implementation of the embodiment of the present disclosure, a resource transfer is performed on the target prop in response to an input for the control for triggering the resource transfer on the target prop.

As an optional implementation of the embodiment of the present disclosure,
the display unit 142 is specifically configured to superimpose the resource operation page corresponding to the target interaction resource in a preset area of the live streaming interface.

The image-based locating apparatus provided in this embodiment may perform the interaction method for live streaming provided in the foregoing method embodiments, with similar implementation principles and technical effect, which is not repeated herein.

Based on the same inventive concept, an embodiment of the present disclosure further provides an electronic device. FIG. 15 is a schematic structural diagram of the electronic device provided by the embodiment of the present disclosure. As shown in FIG. 15, the electronic device provided by the embodiment comprises: a memory 151 and a processor 152, wherein the memory 151 is configured to store a computer program; the processor 152 is configured to perform, when a computer program is executed, the interaction method for live streaming provided by the foregoing embodiment.

Based on the same inventive concept, an embodiment of the present disclosure further provides a computer readable storage medium storing a computer program thereon. The computer program, when executed by a processor, causes the computing device to implement the interaction method for live streaming provided by the foregoing embodiment.

Based on the same inventive concept, an embodiment of the present disclosure further provides a computer program product. The computer program product, when running on a computer, causes the computing device to implement the interaction method for live streaming provided by the foregoing embodiment.

Those skilled in the art should understand that the embodiments of the present disclosure may be provided as a method, a system or a computer program product. Therefore, the present disclosure may take the form of an entirely hardware embodiment, an entirely software embodiment or an embodiment combining software and hardware aspects. Furthermore, the present disclosure may take the form of a computer program product implemented on one or more computer-usable storage media having computer-usable program code embodied therein.

The processor may be a central processing unit (CPU), and may also be other general-purpose processor, a digital signal processor (DSP), an application specific integrated circuit (ASIC), a field-programmable gate array (FPGA), or other programmable logic device, a discrete gate or a transistor logic device, a discrete hardware component, or the like. The general-purpose processor may be a microprocessor, or the processor may also be any conventional processor.

The memory may include a non-permanent memory in a computer readable medium, a random access memory (RAM), and/or a non-volatile memory, such as a read-only memory (ROM) or a flash RAM. A memory is an example of a computer-readable medium.

Computer-readable media include persistent and non-persistent, removable and non-removable storage media. Storage media may implement information storage by any method or technology, and the information may be computer-readable instructions, data structures, modules of a program, or other data. Examples of computer storage media include, but are not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disc read-only memory (CD-ROM), digital versatile discs (DVD) or other optical storage, magnetic cassettes, disk storage or other magnetic storage devices, or any other non-transmission media, which may be used to store information accessible by a computing device. As defined herein, computer readable media does not include transitory computer readable media, such as modulated data signals and carrier waves.

Finally, it should be noted that the foregoing embodiments are merely intended to describe the technical solutions of the present disclosure, rather than limiting the present disclosure. Although the present disclosure has been described in detail with reference to the foregoing embodiments, those of ordinary skill in the art should understand that they may still make modifications to the technical solutions described in the foregoing embodiments, or make equivalent replacements to some or all technical features thereof. These modifications or replacements do not make the essence of the corresponding technical solutions depart from the scope of the technical solutions of the embodiments of the present disclosure.

## Claims

1. An interaction method for live streaming, comprising:
receiving a first input comprising an input for a live streaming interface;
in accordance with a determination that a live streaming login account corresponding to the live streaming interface has at least one interaction resource, displaying an interaction resource list according to the at least one interaction resource;
receiving a second input comprising an input for a target interaction resource in the interaction resource list; and
in response to the second input, publishing target interaction information corresponding to the target interaction resource in a live streaming room corresponding to the live streaming, so as to present a resource operation page corresponding to the target interaction resource in response to receiving an input for the target interaction information.

2. The method of claim 1, wherein displaying the interaction resource list according to the at least one interaction resource comprises:
classifying and presenting, in the interaction resource list, the at least one interaction resource according to a resource obtaining mode of the interaction resource,
wherein the resource obtaining mode of the interaction resource comprises: obtaining the interaction resource through resource exchange and obtaining the interaction resource by completing a specified task.

3. The method of claim 1, further comprising:
outputting guidance information in the case that the live streaming login account corresponding to the live streaming interface has no interaction resource,
wherein the guidance information is used for guiding a user to obtain an interaction resource.

4. The method of claim 1, wherein the target interaction information comprises:
an account identifier, description information and a resource card,
wherein the account identifier is used for identifying a user publishing the target interaction information, the description information is used for describing the target interaction information, and the resource card is used for describing the target interaction resource.

5. The method of claim 4, wherein the resource card comprises:
a bottom frame, a front cover image of the target interaction resource and a name of the target interaction resource,
wherein the front cover image and the name are superimposed on the bottom frame.

6. An interaction method for live streaming, comprising:
displaying a live streaming interface comprising target interaction information corresponding to a target interaction resource;
receiving an input for the target interaction information; and
in response to the input for the target interaction information, presenting a resource operation page corresponding to the target interaction resource on the live streaming interface.

7. The method of claim 6, further comprising:
receiving an input for a first control in the resource operation page; and
performing an operation corresponding to the first control in the resource operation page in response to the input for the first control.

8. The method of claim 7, wherein the target interaction resource is a song list comprising at least one song, and the resource operation page comprises an identifier of the at least one song and a song request control corresponding to each song; the first control is a song request control corresponding to a target song on the resource operation page; and performing an operation corresponding to the first control in the resource operation page in response to the input for the first control comprises:
in response to an input for the song request control corresponding to the target song, obtaining audio data of the target song, and adding the audio data of the target song to an audio data playback queue in the live streaming room.

9. The method of claim 7, wherein the target interaction resource is a target prop, the resource operation page is a presentation page of the target prop, and the first control is a control for triggering the resource transfer on the target prop in the presentation page of the target prop; performing an operation corresponding to the first control in the resource operation page in response to the input for the first control comprises:
performing a resource transfer on the target prop in response to an input for the control for triggering the resource transfer on the target prop.

10. The method of claim 9, further comprising:
after performing a resource transfer on the target prop, presenting an effect corresponding to the target prop in response to a user request for the target prop.

11. The method of claim 6, wherein presenting the resource operation page corresponding to the target interaction resource on the live streaming interface comprises:
superimposing the resource operation page corresponding to the target interaction resource in a preset area of the live streaming interface.

12. A terminal device, comprising:
a user input unit configured to receive a first input comprising an input for a live streaming interface;
a display unit configured to display, in accordance with a determination that a live streaming login account corresponding to the live streaming interface has at least one interaction resource, an interaction resource list according to the at least one interaction resource;
wherein the user input unit is further configured to receive a second input comprising an input for a target interaction resource in the interaction resource list; and
a processing unit configured to, in response to the second input, publish target interaction information corresponding to the target interaction resource in a live streaming room corresponding to the live streaming, so as to present a resource operation page corresponding to the target interaction resource in response to receiving an input for the target interaction information.

13. A terminal device, comprising:
a display unit configured to display a live streaming interface comprising target interaction information corresponding to a target interaction resource; and
a user input unit configured to receive an input for the target interaction information,
wherein the display unit is further configured to, in response to the input for the target interaction information, present a resource operation page corresponding to the target interaction resource on the live streaming interface.

14. An electronic device, comprising: a memory and a processor, wherein the memory is configured to store a computer program; the processor is configured to, when executing a computer program, enable the electronic device to implement an interaction method for live streaming of any of claims 1 to 11.

15. A computer readable storage medium, storing a computer program thereon, wherein the computer program, when executed by a computing device, causes the computing device to implement an interaction method for live streaming of any of claims 1 to 11.
